# EUROPEAN PATENT APPLICATION

(11) **EP 2 947 466 A1**
(43) Date of publication of application: **25.11.2015**
(21) Application number: 14169529.6
(22) Date of filing: 22.05.2014
(51) Int. Cl.: G01R 15/16

(54) **Energy harvesting device**

(71) Applicant: 3M Innovative Properties Company, Saint Paul, MN 55133-3427 (US)
(72) Inventor: Eggert, Sebastian, 40227 Düsseldorf (DE); Weinmann, Christian, 52477 Alsdorf (DE); Stalder, Michael, 47589 Uedem (DE); Gravermann, Mark, 41812 Erkelenz (DE); Richter, Jessica, 40227 Düsseldorf (DE); Hahn, Joerg, 42349 Wuppertal (DE)
(74) Representative: Bergen, Katja

(57) **Abstract**

The invention relates to an energy harvesting device for an insulated power carrying conductor (1) of a power network, the energy harvesting device comprising:
- an insulating layer (2) arranged concentrically around an axial section of the power carrying conductor (1);
- a layer of conductive or semi-conductive material (3) arranged concentrically around at least an axial section of the insulating layer (2);
- an electrode element (4) made out of a portion of the layer of conductive or semi-conductive material, wherein the electrode element is electrically isolated from the rest of the layer of conductive or semi-conductive material;
- a harvesting capacitor, which is formed by the power carrying conductor being operable as one electrode and the electrode element of conductive or semi-conductive material being operable as another electrode; and
- an electrical or electronic circuit for energy harvesting, which is electrically connected to the harvesting capacitor.

## Description

The invention relates to an energy harvesting device for an insulated power carrying conductor of a power network (e.g. a high or medium voltage power network), such as an inner conductor of an insulated power cable or an insulated cable connector or an insulated bus bar. The invention also relates to a method of providing energy to an electrical circuit in the environment of an insulated power carrying conductor of a power network. And the invention further relates to the use of an energy harvesting device according to the invention for operating electronics in the proximity of an insulated power carrying conductor.

In the technical field of high or medium voltage power network there is the need of measuring certain parameters, such as for example voltage, current and/or temperature. There may further be the need for other electronic equipment such as for example an electrical or electronic interface or a communication device.

WO 2012/130816 A1 discloses an apparatus for measuring the potential on a cable such as those used in medium voltage distribution networks. The measurement apparatus for measuring the voltage of an insulated electrical cable includes at least one central conductor, a first dielectric layer surrounding the at least one central conductor, a semiconducting layer surrounding the first dielectric layer and a cable shield surrounding the semi-conductive layer. The apparatus comprises a sensing electrode assembly arranged around the cable, comprising a sensing electrode element connected to the semiconductor layer such that the sensing capacitor is formed by the semiconductor layer together with the at least one central conductor and at least the first dielectric layer of the insulated electrical cable. An electrical circuit is connected to the sensing electrode element.

These sensing devices and/or according electronics that may for example be needed to transmit data (communication device) or to adapt data to following processes (interface device) require energy. Usually such electronic equipment require only small amounts of energy, for example in the range of a few milli watts (mW), while the power carrying conductor that is sensed transfers power in the range from kilo watts (kW) to mega watts (MW).

Although large amounts of energy are available in the energized power carrying conductor, retrieving small amounts of energy directly out of it requires electrical provisions like terminations, switches and transformers. Those means are large in size as they are designed to withstand the high voltage and power of a medium or high voltage network. Furthermore is the installation of such means complicated and cost intensive.

Energy harvesting devices for high voltage transmission line monitoring that do not need the above mentioned electrical provision are known. One of those known systems is for example described in US 2009/0015239 A1, which discloses a system and method in which an overhead high voltage transmission line sensor system is able to measure one or more of temperature, current and line sag for a conductor within a high voltage transmission line system. The sensor system may be able to clamp to a transmission conductor or splice, harvest power from the transmission line and/or transmit data corresponding to measurements of current, temperature and line sag.

The energy harvesting devices for high voltage transmission line monitoring that are known work as a capacitive voltage divider and are described for example in "Energy Harvesting Devices for High Voltage Transmission Line Monitoring" from Feng Guo, Student Member IEEE, Hassan Hayat and Hin Wang, Member IEEE; 978-1-4577-1002-5/11/$ 26,00 © 2011 IEEE. The basic idea of this concept is to use an energy harvesting tube - a metal tube - to extract energy from the electric field around the high voltage transmission line. When an energy harvesting tube is added to the transmission line, the system could be seen as two equivalent capacitors connected in series, where a first capacitor stands for the equivalent capacitance between the high voltage transmission line and the tube and a second capacitor represents the equivalent capacitance between the tube and the earth ground. A power conditioning circuit and its load, such as sensors and communication units, can be seen as an equivalent resistive load that is connected in parallel with the first capacitor.

In view of the above cited prior art, there is still a need for an energy harvesting device for an insulated power carrying conductor of a power network, such as an insulated inner conductor of a power cable or an insulated cable connector or an insulated bus bar that can easily be integrated in existing network equipment, such as for example a power cable, a cable connector or a bus bar. There is further a need for an energy harvesting device for an insulated power carrying conductor of a power network that only needs a small amount of space.

The present invention provides an energy harvesting device with the features of claim 1. According to the invention the energy harvesting device for an insulated power carrying conductor of a power network comprises:
- an insulating layer arranged concentrically around an axial section of the power carrying conductor;
- a layer of conductive or semi-conductive material arranged concentrically around at least an axial section portion of the insulating layer;
- an electrode element made out of a portion of the layer of conductive or semi-conductive material, wherein the electrode element is electrically isolated from the rest of the layer of conductive or semi-conductive material;
- a harvesting capacitor, which is formed by the power carrying conductor being operable as one electrode and the electrically isolated electrode element of conductive or semi-conductive material being operable as another electrode; and
- an electrical or electronic circuit for energy harvesting, which is electrically connected to the harvesting capacitor.

The insulated power carrying conductor according to claim 1 may be an insulated power cable, an insulated cable connector or an insulated bus bar. The insulating layer consists of a non conductive material, such as for example cross-linked PolyEthylene (XLPE) or hard grade Ethylene Propylene Rubber (HEPR).

In a high or medium voltage power network the power carrying conductor is usually surrounded by a layer of conductive or semi-conductive material that extends along the outside of an insulating layer of the power carrying conductor. The purpose of this conductive or semi-conductive material is to smoothen and limit the electric field in between the power carrying conductor and the conductive or semi-conductive material. According to the invention, the existing structure of an insulated cable, connector or bus bar is used to provide a part of the energy harvesting device. A part or a portion of the layer of conductive or semi-conductive material is mechanically and electrically separated from the rest of the conductive or semi-conductive layer positioned on the outside of the insulating layer and forming an electrode element. This electrically and mechanically isolated electrode element may have the shape of a ring out of conductive or semi-conductive material. It is also possible that the electrode element covers only a part of the circumference of the insulating layer. This electrically isolated electrode element is contacted to an electrical or electronic circuit for energy harvesting. It forms an electrode of a capacitor. The other electrode of the capacitor is formed by the power carrying conductor itself. The cable insulation forms the dielectric material between the two electrodes of the capacitor. When the power carrying conductor is energized, an alternating electric field is present in the capacitor that can be used for energy harvesting purposes, for example by contacting the electrically isolated electrode element to the above mentioned electronic circuit for energy harvesting and connecting a load circuit.

Using existing structures of an insulated power carrying conductor provides the advantage that the solution of the invention is space saving since only a limited number of additional components are necessary. For example, the energy harvesting device described as "metal tube" in the prior art section, is about half a meter long and has a cross section of one third of a meter. The capacitor of the energy harvesting device according to the invention may have dimensions of a length of 60 mm and a diameter of 30 mm and fits into the existing structure of the insulated power carrying conductor. It further provides the advantage that no additional requirements are necessary to ensure the smooth electrical field gradients around the power carrying conductor. Therefore the solution according to the invention may easily be integrated into equipment, even existing equipment, of a high or medium voltage network comprising insulated power carrying conductors. In addition, due to the use of capacitive coupling no galvanic contact is required with the power carrying conductor, which furthermore reduces the costs and space requirements of the inventive solution.

The invention therefore provides a space saving and cost-effective solution to harvest small amounts of energy from an alternating electrical field of an insulated power carrying conductor of a high or medium voltage power network. This energy may for example be used to operate low-power electronics like sensors, electronic interfaces or communication devices in proximity of such conductors.

The conductive or semi-conductive material may for example be made out of metal or specially prepared polymers. In particular, it may comprise a layer of copper, conductive paint or carbon particles.

The electrically isolated electrode element of conductive or semi-conductive material concentrically extends around at least a portion of the outside of the insulating layer of the power carrying conductor. As mentioned above it may extend along a full circumference of at least an axial portion of the insulating layer, thereby building a ring of electrically isolated conductive or semi-conductive material. The electrically isolated electrode element may be affixed to the insulating layer of the power carrying conductor by an adhesive. The adhesive may be a pressure-sensitive adhesive or a hot melt adhesive.

The insulated power carrying conductor according to the invention may further comprise additional conductive or semi-conductive material. That additional conductive or semi-conductive material may be arranged concentrically around at least an axial section of the insulating layer or it may extend around outside of the entire remaining insulating layer. It may be arranged on either side of the electrically isolated electrode element of conductive or semi-conductive material. The additional conductive or semi-conductive material may comprise two conductive or semi-conductive axial sections. One or both of these sections may extend along a full circumference of at least an axial portion of the insulating layer or of the entire remaining rest of the insulating layer. One or both of the two axial sections may be electrically isolated from the electrically isolated electrode element by non-conductive axial sections.

The electrode element is electrically isolated from the conductive or semi-conductive material extending along the outside of the insulating layer of the power carrying conductor. The electrode element may be made by removing two small rings (annular sections) of the layer of conductive or semi-conductive material on each side of the portion to be isolated. It is also possible to remove wider portions of the layer of conductive or semi-conductive material and to apply a separate electrode made of conductive material afterwards.

According to another embodiment of the invention, a second electrically isolated electrode element made out of a portion of the layer of conductive or semi-conductive material is provided, wherein the electrode element is electrically isolated from the rest of the layer of conductive or semi-conductive material and the first electrically isolated electrode element. The second electrically isolated electrode element is provided on the outer surface of the insulation layer and concentrically extends around at least a portion of the outside of the insulating layer of the power carrying conductor. As mentioned above it may extend along a full circumference of at least an axial portion of the insulating layer, thereby building a ring of electrically isolated conductive or semi-conductive material. The electrically isolated electrode element may be affixed to the insulating layer of the power carrying conductor by an adhesive. The adhesive may be a pressure-sensitive adhesive or a hot melt adhesive. The second electrode element may be positioned adjacent to the first electrode element. It is also possible to provide between the two electrode elements a piece of conductive or semi conductive material that has ground potential.

The first and second electrically isolated electrode elements may be electrically isolated from each other and the rest of the conductive or semi-conductive material by providing areas of non-conductive or non-semi-conductive material between the electrode elements and the rest of the conductive or semi-conductive material. An insulating material such as mastic or rubber may be applied between the electrode elements to provide the mechanical and electrical isolation.

A sensing capacitor may be formed by the power carrying conductor being operable as one electrode and the electrically isolated second electrode element of conductive or semi-conductive material being operable as another electrode. With such a construction it is possible to generate a certain amount of energy by using the first electrically isolated electrode element together with the harvesting capacitor. This energy can be used for the second electrically isolated electrode element and the according circuit with a sensing capacitor. The sensing capacitor may for example be used for sensing the voltage of the power carrying conductor, while the harvesting capacitor may be used for harvesting energy that is needed to conduct the voltage sensing. The described assembly thus may provide two electrical or electronic circuits, at least one for energy harvesting, for example one for sensing and one for energy harvesting. Each circuit provides its separate capacitor. The circuits connected to the respective capacitors according to the invention differ. E.g. for voltage sensing a discrete second capacitor connects the electrically isolated electrode element with ground potential while for energy harvesting a load circuit is needed (see below). It is not possible to connect different circuits to the capacitor according to the invention at the same time, as the load circuit for the energy harvesting operates at a voltage level much too high for measurement electronics and it interferes with the accuracy of the measurement. Therefore it is one option to use two different electrodes for two different capacitors.

According to another embodiment the electrical or electronic circuit for energy harvesting may provide a load circuit for extracting energy from the capacitor. The load circuit may incorporate voltage limiting devices, such as a rectifier, coupled inductors, switched inductors and/or switched coupled inductors and energy storage means like capacitors and/or or batteries. For the voltage limiting devices varistors or zener- or breakdown diodes may be used.

The rectifier may consist of one or several diodes or transistors or field effect transistors (FETs) forming a half-wave, a full-wave or a bridge rectifier. The coupled inductors may be realized as a transformer where the primary winding features the same impedance as the energy harvesting capacitor and the secondary winding provides a different impedance matching the needs of the subsequent circuit to be supplied e.g. a sensing device. Both windings may be magnetically coupled by a core of permeable material like iron or steel. The core material may be a stack of sheets isolated from each other by varnish or lacquer or the like. The coupled inductors or the transformer may be constructed to work at the line frequency of the power network, which is typically 50 Hz in Europe. In case a switched inductor is used this device may be constructed either as an air-core coil or as a choking coil featuring a core of a permeable material like ferrite, iron or steel. The inductors may be switched into operation and off alternating with a frequency different from the line frequency of the power network. Switched coupled inductors may feature two or more windings magnetically coupled by a core of permeable material like iron, steel or ferrite, where the core may be solid or a stack of individually isolated sheets. The coupled inductors may be switched into operation and off alternating with a frequency different from the line frequency of the power network.

According to another embodiment of the invention, the electrical or electronic circuit for energy harvesting provides an energy storing element. For energy storage various types of capacitors may be used, depending on the amount of energy to be stored and the time to span. Suitable types may be constructed with dielectric media like ceramics, plastic film, liquid electrolyte or highly porous materials like carbon. Super capacitors or electric double-layer capacitors may be used as well. Rechargeable batteries of various chemistries may be used alternatively or additionally to a capacitor for the energy storage device.

According to yet another embodiment of the invention, an electrical or electronic or electro-mechanical switch element is provided that electrically connects two circuits to the same electrode element in an alternating way. Possible examples for the two circuits are the above mentioned circuits being a circuit for energy harvesting and a circuit for sensing. It is also possible to connect more than two circuits to the capacitor according to the invention. In such a scenario the switch element would need to be adapted accordingly. It is also possible to connect other kind of circuits to the capacitor according to the invention, like circuits for data transmission (communication device) or data adaptation (interface device). By using a switch connecting different circuits in an alternating way to the capacitor according to the invention, it is possible to use one capacitor for different purposes.

According to another embodiment of the invention the switch element may be realized by one or several transistors, field effect transistors (FETs) or thyristors. Also electro-mechanical devices like air gap switches, relays or reed contacts may be used. The switch element may be controlled by an energy management system.

According to another embodiment of the invention an energy management system for managing the energy harvesting device and related electrical or electronic circuits is provided. The system may incorporate measurement and calculation means for determining the amount of energy available in the energy storing element. Further the system may have means to indicate the energy level of the energy storing device to the sensing device. The energy management system may be in control of the switch element. Threshold values for certain amounts of energy available in the energy storing device may be set to determine the time when the switch element is activated and deactivated or the time when to indicate the energy level to the sensing device and when to actuate the switch element. The system furthermore may connect to a communication device for reporting the status of the energy storage, the position of the switch element and measurement data to a superior system.

The energy harvesting device according to the invention may provide in its energy harvesting electrical or electronic circuit switched inductors for power conversion. Due to the small capacitance of the energy harvesting capacitor and the line frequency of the power network of for example 50 Hz (typically for European power networks) or 60 Hz (typically for US power networks), the output impedance of the energy harvesting capacitor is quite high (hundreds of Mega-Ohms). The maximum energy extraction can be achieved when the load circuit has the same impedance as the source, thus the capacitor. In this configuration the voltage across the load circuit is about half the cable's voltage (e.g., for 12 kV MV the voltage across the load circuit will be up to 6 kV). This is a considerably large voltage when intending to power electronics for interfaces, sensors or communication purposes. Those are usually operated with voltages in the range of 3 V to 5 V. On the other hand, the current flowing through the load circuit is fairly small as it is in the range of µA. Even low power electronics will draw current in the order of a few mA. The invention uses switched inductors commonly referred to as switching regulator to match the harvester's output impedance to the electronics input impedance implying optimal power transfer from source to load can be achieved.

According to another embodiment the energy harvesting device according to the invention may provide in its energy harvesting electrical or electronic circuit coupled inductors for power conversion. Coupled inductors, commonly referred to as a transformer, are used to match the harvester's output impedance to the electronics input impedance. By this means optimized power transfer from source to load can be achieved.

According to another embodiment of the invention, the capacitor of the energy harvesting device has an axial length up to 60 mm and a diameter of up to 30 mm.

The invention also relates to a method of providing energy to an electrical or electronic circuit in the environment of an insulated power carrying conductor of a power network, such as an insulated inner conductor of a power network, the method comprising the following steps:
a) providing an energy harvesting device according to any of the claims 7 to 12;
b) providing at least one additional separate electrical or electronic circuit with energy consuming components;
c) putting a switch element in a condition that the energy harvesting device provides energy;
d) storing energy the energy provided by the energy harvesting device in a energy storing device;
e) putting the switch element in a condition that the additional electrical or electronic circuit is activated, wherein this circuit is powered by electrical energy provided by the energy harvesting device and stored in the energy storing device.

The power carrying conductor of the power network may be an insulated inner conductor of a power cable or an insulated cable connector or an insulated bus bar.

The invention also relates to the use of an energy harvesting device as described above for harvesting energy for operating electronics comprising sensors, electronic interfaces or communication devices or the like.

The invention will now be described in more detail with reference to the following Figures exemplifying particular embodiments of the invention:
- Fig. 1: a schematic drawing of a first embodiment of an energy harvesting device according to the invention;
- Fig. 2: a schematic drawing of a second embodiment of an energy harvesting device according to the invention;
- Fig. 3: a schematic drawing of a third embodiment of an energy harvesting device according to the invention;
- Fig. 4: a schematic drawing of a system including an energy harvesting device and a sensing device;
- Fig. 5: an energy harvesting circuit of an energy harvesting device according to one embodiment of the invention, using switched inductors as an impedance converter;
- Fig. 6: an energy harvesting circuit of an energy harvesting device according to another embodiment of the invention, using switched inductors as an impedance converter; and
- Fig. 7: another energy harvesting circuit of an energy harvesting device according to one embodiment of the invention comprising a voltage limiting device.

Herein below various embodiments of the present invention are described and shown in the drawings wherein like elements are provided with the same reference numbers.

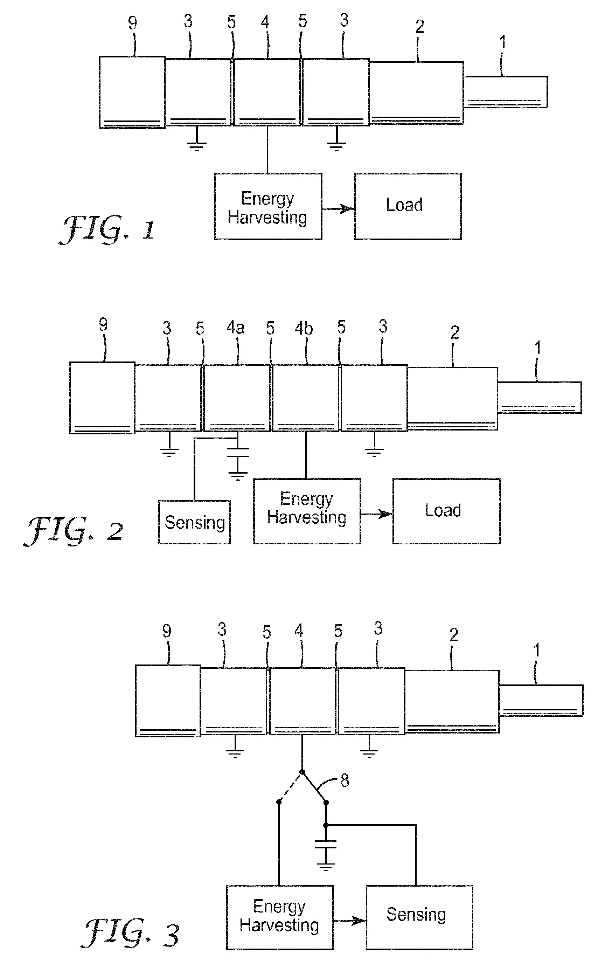

In Fig. 1 a power carrying conductor 1 of a power network is shown. The conductor 1 is surrounded by an insulating layer 2 which extends concentrically around at least an axial section of the conductor 1. The insulating layer 2 comprises a non conductive material, such as for example cross-linked Polyethylene (XLPE) or hard grade Ethylene Propylene Rubber (HEPR). A layer of conductive or semi-conductive material 3 is concentrically arranged around the insulating layer 2. The layer of conductive or semi-conductive material 3 may extend over the entire length of the insulation layer 2 around the power carrying conductor 1. The layer of conductive or semi-conductive material 3 carries ground potential. It extends over at least an axial section of the insulating layer 2. In the embodiment shown in Fig. 1 an electrode element 4 made out of a portion of the layer of conductive or semi-conductive material 3 is provided that extends around the entire circumference of the insulating layer 2 of the power carrying conductor 1 and is electrically and mechanically isolated from the rest of layer of the conductive or semi-conductive material 3. The electrode element 4 is a ring shaped layer of conductive or semi-conductive material that does not touch the rest of the layer of conductive or semi-conductive material 3. It may be made by removing small rings of the layer of conductive or semi-conductive material 3, which leads to small recesses 5 in between the rings of conductive or semi-conductive material 3, 4 and mechanically and electrically disconnect the layer of conductive or semi-conductive material 3 into different pieces. The conductive or semi-conductive layer 3 is enclosed by a cable jacket 9, shown on the left hand side of Fig. 1.

In the embodiment shown in Fig. 1 the electrode element 4 is used as an electrode of a capacitor, wherein the power carrying conductor 1 is used as another electrode of this capacitor. The insulting layer 2 between the power carrying conductor 1 and the electrode element 4 is used as the dielectric element of the capacitor.

The electrode element 4 is connected to an energy harvesting circuit and a load circuit, which may represent for example a rectifier, coupled and/or switched inductors or switched coupled inductors or a resistor. By contacting the electrically isolated electrode element 4 to a load circuit, energy can be extracted from the capacitor. The load circuit may be a sensing device, an interface device and/or communication means.

In Fig. 2 another embodiment of an energy harvesting device according to the invention is shown. It comprises a conductor 1 with an insulating layer 2 which extends concentrically around at least an axial section of the conductor 1. The insulating layer 2 may comprise the same material as mentioned above with regard to the embodiment shown in Fig. 1. A layer of conductive or semi-conductive material 3 is concentrically arranged around the insulation layer 2. The layer of conductive or semi-conductive material 3 may extend over the entire length of the insulated power carrying conductor 1. The layer of conductive or semi conductive material 3 carries ground potential. It extends over at least an axial section of the insulating layer 2. In the embodiment shown in Fig. 2 two electrode elements a first electrode element 4a and a second electrode element 4b made out of a portion of the layer of conductive or semi-conductive material 3 are provided that are electrically and mechanically isolated from the rest of the conductive or semi-conductive material 3. The electrode elements 4a, 4b are ring shaped layers of conductive or semi-conductive material that do not touch the rest of the layer of conductive or semi-conductive material 3. They may be made by removing small rings of the layer of conductive or semi-conductive material 3, which leads to small recesses 5 in between the rings of conductive or semi-conductive material 3, 4a, 4b and mechanically and electrically disconnect the layer of conductive or semi-conductive material 3 into different pieces as described above.

In the embodiment shown in Fig. 2 the electrode element 4a is used as an electrode of a first capacitor for a voltage sensing device and the electrode element 4b is used as an electrode of a second capacitor for an energy harvesting circuit as described in Fig. 1. The electrode element 4a, which is part of a capacitor together with the conductor 1 and the insulating layer 2, may therefore be connected with a second capacitor (not shown). The two capacitors build a voltage divider. All other sensing devices that use a capacitor may be connected to electrode element 4a as well. The electrode element 4b is connected to an energy harvesting circuit, which is in the embodiment shown in Fig. 2 the sensing device. By contacting the electrically isolated electrode element 4b to a load circuit, energy can be extracted from the capacitor. This energy can be used for example for supplying the voltage sensing circuit mentioned above.

Fig. 3 shows another embodiment of an energy harvesting device according to the invention. In this embodiment, a power carrying conductor 1 of a power network is shown. The conductor 1 is surrounded by an insulating layer 2, which extends concentrically around at least an axial section of the conductor 1. The insulating layer 2 comprises a non conductive material, such as mentioned above with reference to Fig 1 or 2. A layer of conductive or semi-conductive material 3 is arranged concentrically around the insulating layer 2. The layer of conductive or semi-conductive material 3 may extend over the entire length of the insulating layer 2 around the power carrying conductor 1. The layer of conductive or semi-conductive material 3 carries ground potential. It extends over at least an axial section of the insulating layer 2. In the embodiment shown in Fig. 3 as in the embodiment shown in Fig. 1 one electrode element 4 made out of a portion of the layer of conductive or semi conductive material 3 is provided that extends around the entire circumference of the insulating layer 2 of the power carrying conductor 1. This electrode element is made out of a portion the layer of conductive or semi-conductive material and is electrically and mechanically isolated from the rest of the layer of conductive or semi-conductive material 3. The electrode element 4 is a ring shaped layer of conductive or semi-conductive material that does not touch the rest of the layer of conductive or semi-conductive material 3. It may be made by removing small rings of the layer of conductive or semi-conductive material 3, which leads to small recesses 5 in between the rings of conductive or semi conductive material 3, 4 and mechanically and electrically disconnects the layer of conductive or semi-conductive material 3 into different pieces.

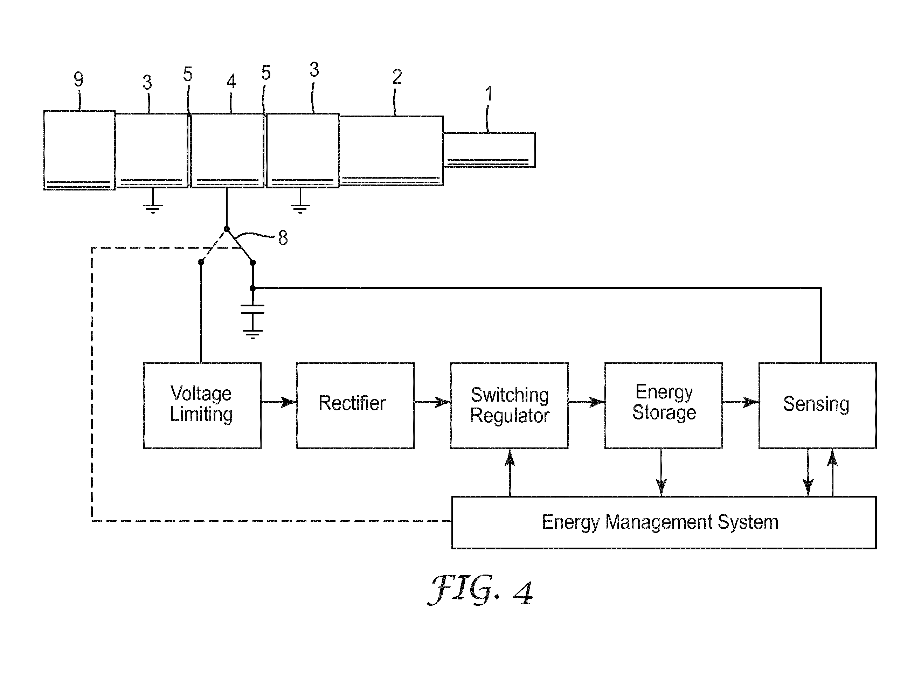

In the embodiment shown in Fig. 3 the electrode element 4 is connected to a switch element 8. Depending of the position of the switch 8, the electrode element 4 is either electrically connected to a sensing device or electrically connected to a energy harvesting circuit. Thus the electrode element 4 is either used as an electrode of an energy harvesting capacitor, wherein the power carrying conductor is used as one electrode of this energy harvesting capacitor and the electrode element is connected to a load circuit. Or the electrode element 4 is used as an electrode of a voltage sensing capacitor, wherein the power carrying conductor is used as another electrode of the voltage sensing capacitor. Both circuits, the circuit for energy harvesting and the circuit for voltage sensing, can use the same electrode element 4 in an alternating way. The energy harvesting circuit may comprise an energy storing element (see Fig. 4) for saving the energy that has been extracted from the harvesting capacitor.

In Fig. 4 is shown a schematic drawing of a system comprising an energy harvesting device according to the invention and a sensing device, both devices using the same electrode element 4. As described above, the electrode element 4 is connected to a switch element 8. The switch element 8 may connect the electrode element either to the sensing device or the energy harvesting device. The energy harvesting device may include a voltage limiting device, a rectifier, a switching regulator, an energy storage element as well as an energy management system.

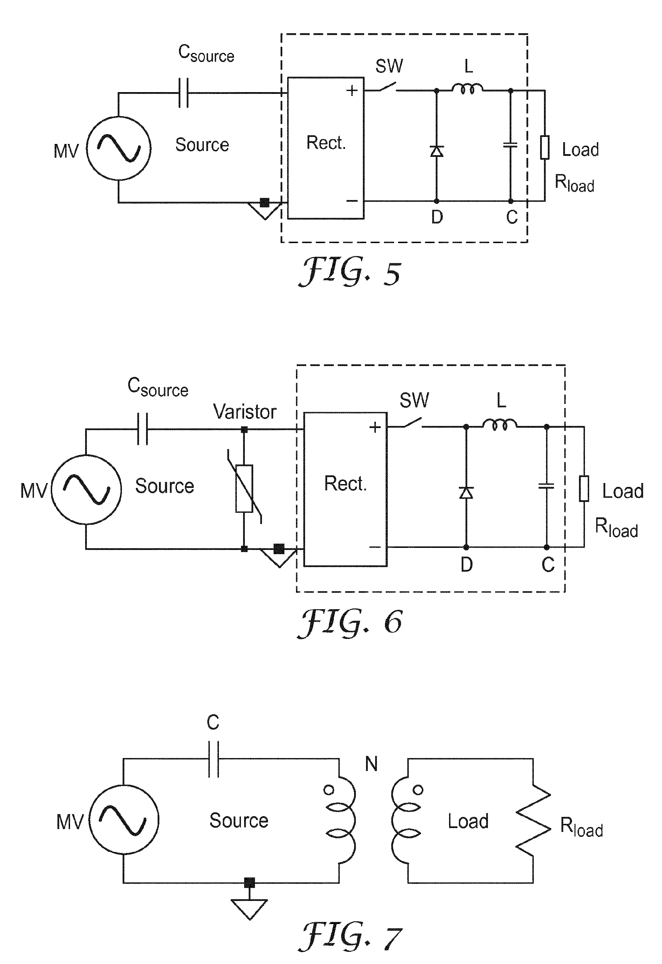

As mentioned above, when extracting energy with an energy harvesting device according to the invention, there may be a mismatch between the magnitudes of voltage and current extracted by the energy harvesting device according to the invention and the voltage and current needed for operating electronics for sensors, interface or communication purposes. There are several methods to overcome this mismatch of voltage and current. One way is to use switched inductors or switched coupled inductors, commonly referred to as switching regulator. One embodiment of this solution is shown in Fig. 5. This embodiment uses the principle of a buck converter, consisting of a rectifier Rect, a switch SW, and an inductor L, a diode D and a second capacitor C. This circuit is connected between the source, including the capacitor Csource built out of the power carrying conductor 1 and the electrode element 4, 4b, and the load circuit. The rectifier Rect converts the AC voltage to DC voltage (full bridge rectifier). The switch SW may be controlled by a clock generator (not shown).

The principle of operation can be described as follows. By repeatedly closing and opening the switch SW shown in Fig. 5, portions of the energy available are being transferred from the source to the load. The ratio between the output voltage (load) and the input voltage (source) can be determined by a duty cycle D, which depends from the ratio on-time and a period.

The circuit shown in Fig. 5 is of theoretical nature, since no electronic component exists that can withstand the voltage drop across the capacitor Csource in the order of kiloVolts. By integrating a voltage limiting device like a varistor or zener-or breakdown diodes this drawback can be overcome. A circuit comprising a varistor for the voltage limiting device is shown in Fig. 6. The varistor may be able to limit the voltage to about 400V. At this voltage components for the circuit are available. Using a varistor decreases the source impedance to about 6 MΩ and of course the amount of power extractable from the source. The switch SW can be one or several transistors or FETs or thyristors, which all have an ohmic series resistance, as applies to the inductor. With these components the circuit would lead to a power efficiency <1.

The switching frequency of the switch SW may be different from the line frequency of the power network. It may be in the order of kHz or MHz, e.g. 10 kHz. The switching frequency may be constant or varying. In another case a first frequency determines the ratio between the duration of the closed state and the duration of the active state of the switch. Within the time span of the active state the switch may be triggered multiple times with a second frequency which may be higher than the first frequency.

Another method to match source and load impedance is to use coupled inductors. An according circuit is shown in Fig. 7. The circuit of Fig. 7 comprises as the circuits of Fig. 5 and Fig. 6 a source side and a load side. Two magnetically coupled inductors, also known as a transformer, are used to connect the two parts of the circuit. The inductors may be named primary and secondary inductors. Their turn ratio N defines the proportion of the primary impedance to the secondary impedance of the transformer. Selecting an adequate ratio of the turn ratio N of the primary and the secondary inductor allows to resolve the above described impedance mismatch. Using a transformer to match the energy harvester's source impedance to the load impedance enables maximum power transfer from source to load.

For the energy harvesting device described above, the optimal operating voltage of a sensing device or any other electrical or electronic circuit, using the energy provided by the energy harvesting device, is 100 to 400 V AC. This area is a compromise between optimum impedance matching, allowed voltage at the sensor area and available electronic parts. The voltage for the target electronics is 5 V or 3,3 V. There is the need for an integrated circuit in an energy harvesting circuit to match the voltages. A step down converter can be used to adapt the voltage. The duty cycle D for such a converter depends on the input voltage and the output voltage. In the above described case it is between 5 and 0,825%. Such an integrated circuit using a one step converter may have a low duty cycle, not a constant output voltage, noise at the output and difficult line regulation, which needs much power.

To enhance the integrated circuit a two stage converter may be used. The first stage requires that a 100 to 400 V AC input voltage is harvested to provide the appropriate voltage to drive the integrated circuit to step down the voltage. Due to high resistance and availability of current (which is low), the integrated circuit responsible for the first stage of conversion would need to be driven by a separate circuit (adding components and costs) or would need to harvest its own power from the available input voltage. The solution implements the latter and pulls the required voltage through the use of a switch, inductor, and capacitor circuit. When the switch is closed, the voltage passes through the inductor and begins to build on the capacitor. A predetermined threshold is reached when enough voltage is stored on the capacitor to power the integrated circuit responsible for stepping the voltage down. The switch is then opened and the input voltage is stepped down (by the integrated circuit). The switch is closed again when the voltage of the integrated circuit drops below the other threshold (10 to 20 V). The cycle repeats. The voltage is then passed through another DC/DC converter circuit to arrive at the desired output voltage between 3 and 5 V.

## Claims

1. Energy harvesting device for an insulated power carrying conductor (1) of a power network, the energy harvesting device comprising:
- an insulating layer (2) arranged concentrically around an axial section of the power carrying conductor (1);
- a layer of conductive or semi-conductive material (3) arranged concentrically around at least an axial section of the insulating layer (2);
- an electrode element (4) made out of a portion of the layer of conductive or semi-conductive material, wherein the electrode element is electrically isolated from the rest of the layer of conductive or semi-conductive material;
- a harvesting capacitor, which is formed by the power carrying conductor being operable as one electrode and the electrode element of conductive or semi-conductive material being operable as another electrode; and
- an electrical or electronic circuit for energy harvesting, which is electrically connected to the harvesting capacitor.

2. Energy harvesting device according to claim 1, wherein the conductive or semi-conductive layer (3) extends along a full circumference of at least an axial portion of the insulating layer (2).

3. Energy harvesting device according to claim 1 or 2, wherein a second electrode element (4b) made out of a portion of the layer of conductive or semi-conductive material is provided, wherein the second electrode element is electrically isolated from the rest of the layer of conductive or semi-conductive material and the first electrode element (4a).

4. Energy harvesting device according to any of the preceding claims, wherein a sensing capacitor is formed by the power carrying conductor (1) being operable as one electrode and the second electrode element (4b) of conductive or semi-conductive material being operable as another electrode.

5. Energy harvesting device according to any of the preceding claims, wherein at least two separate electrical or electronic circuits are provided, at least one for energy harvesting.

6. Energy harvesting device according to any of the preceding claims, wherein the electrical or electronic circuit for energy harvesting provides a load circuit for extracting energy from the capacitor.

7. Energy harvesting device according to any of the preceding claims, wherein an electrical or electronic or electro-mechanical switch element (8) is provided that electrically connects two circuits to the same electrode (4) element in an alternating way.

8. Energy harvesting device according to any of the preceding claims, wherein the electrical or electronic circuit for energy harvesting provides an energy storing element.

9. Energy harvesting device according to any of the preceding claims, wherein the switch element (8) provides a transistor, a field effect transistor a thyristor and/or a relay.

10. Energy harvesting device according to any of the preceding claims, wherein an energy management system for managing the energy harvesting device and related electrical or electronic circuits is provided.

11. Energy harvesting device according to any of the preceding claims, wherein the energy harvesting electrical or electronic circuit provides switched inductors for power conversion.

12. Energy harvesting device according to any of the claims 1 to11, wherein the energy harvesting electrical or electronic circuit provides coupled inductors for power conversion.

13. Energy harvesting device according to any of the claims 1 to12, wherein the capacitor of the energy harvesting device has an axial length up to 60 mm and a diameter of up to 30 mm.

14. Method of providing energy to an electrical or electronic circuit in the environment of an insulated power carrying conductor of a power network, such as an insulated inner conductor of a power network, the method comprising the following steps:
a) providing an energy harvesting device according to any of the claims 7 to 13;
b) providing at least one additional separate electrical or electronic circuit with energy consuming components;
c) putting a switch element (8) in a condition that the energy harvesting device provides energy;
d) storing energy the energy provided by the energy harvesting device in a energy storing device;
e) putting the switch element (8) in a condition that the additional electrical or electronic circuit is activated, wherein this circuit is powered by electrical energy provided by the energy harvesting device and stored in the energy storing device.

15. Use of an energy harvesting device according to any of the claims 1 to 13 for harvesting energy for operating electronics comprising sensors, electronic interfaces or communication devices or the like.
